# EUROPEAN PATENT SPECIFICATION

(11) **EP 2 377 287 B1**
(45) Date of publication and mention of the grant of the patent: **30.03.2016**
(21) Application number: 09778927.5
(22) Date of filing: 09.01.2009
(51) Int. Cl.: H04L 29/06

(54) **LAWFUL INTERCEPTION IN A COMMUNICATION NETWORK**
LEGALE ERFASSUNG IN EINEM KOMMUNIKATIONSNETZWERK
INTERCEPTION LEGALE DANS UN RESEAU DE LA COMMUNICATION

(43) Date of publication of application: 19.10.2011
(73) Proprietor: Telefonaktiebolaget LM Ericsson (publ), 164 83 Stockholm (SE)
(72) Inventor: KERDO, András, H-1145 Budapest (HU); SZABO, István, H-1147 Budapest (HU)
(74) Representative: White, Duncan Rohan
(86) International application number: PCT/EP2009/050226
(87) International publication number: WO 2010/078965

(56) References cited:
- EP-A2- 1 484 892
- WO-A1-02/093838
- WO-A1-2006/111357
- WO-A1-2008/067849
- WO-A2-99/17499
- "3rd Generation Partnership Project; Technical Specification Group Services and System Aspects; 3G security; Lawful interception architecture and functions (Release 8)" ETSI STANDARD, EUROPEAN TELECOMMUNICATIONS STANDARDS INSTITUTE (ETSI), SOPHIA ANTIPOLIS CEDEX, FRANCE, no. V8.6.0, 1 December 2008 (2008-12-01), pages 1-128, XP007910143
- ALBRECHT SCHWARZ ALCATEL GERMANY ET AL: ITU-T DRAFT STUDY PERIOD 2005-2008, INTERNATIONAL TELECOMMUNICATION UNION, GENEVA ; CH, vol. STUDY GROUP 16, 26 July 2005 (2005-07-26), pages 1-5, XP017407990
- "Lawful Interception (LI); Concepts of Interception in a Generic Network Architecture; ETSI TR 101 943" ETSI STANDARDS, LIS, SOPHIA ANTIPOLIS CEDEX, FRANCE, vol. SEC-LI, no. V2.2.1, 1 November 2006 (2006-11-01), XP014039695 ISSN: 0000-0001

## Description

### Technical Field

The invention relates to the field of lawful interception in a communication network.

### Background

Lawful interception is the interception of private communications between users by a law enforcement agency (LEA) such as a police or intelligence service. It is a requirement of lawful interception in most jurisdictions that the lawful interception does not affect the service provided to the users. Most jurisdictions require public telephony service providers to offer lawful interception access to LEAs. Vendors of switching equipment for public telecommunications networks are required to build the necessary support functionality into any network elements they manufacture and install.

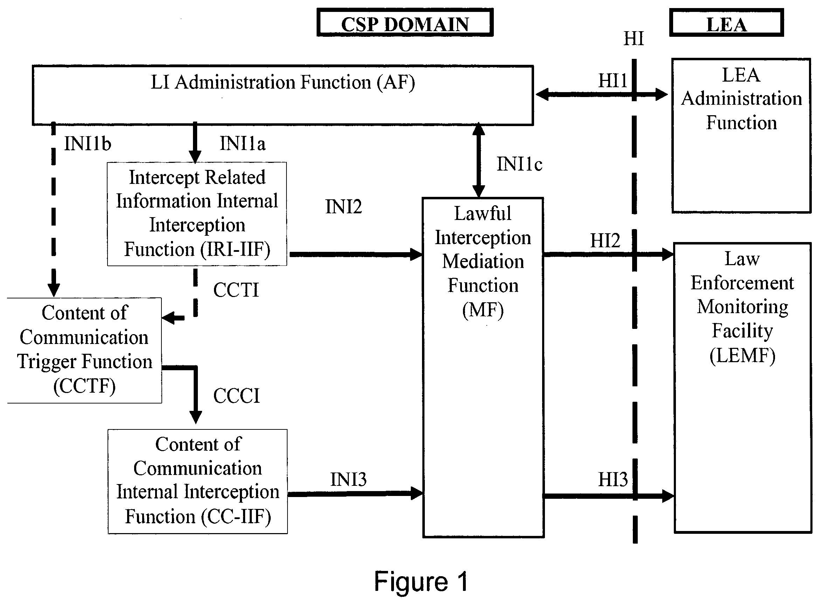

Lawful Interception (LI); Interception Domain Architecture for IP Networks, ETSI TR 102 528 V1.1.1 describes a reference model for providing lawful intercept functionality in an IP network. Figure 1 depicts the reference model.

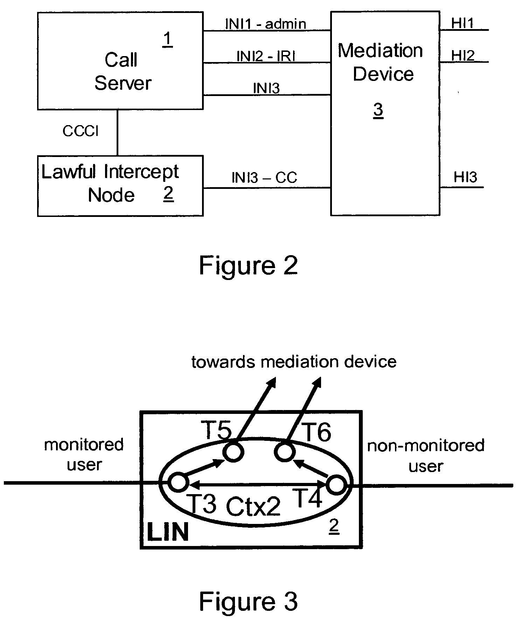

In a layered architecture or Next Generation Network, call servers or media gateway controllers are provided that hold user data. These nodes handle different signalling protocols needed to establish and release calls, and provide supplementary services. The actual content of the communications does not pass through these call servers, but is instead handled by different types of media gateway nodes such as access gateways, trunking gateways, media servers and so on. Figure 2 illustrates a part of such a network architecture. When a Call Server 1 becomes aware that a user who is subject to lawful interception makes a call or establishes another type of communication, the Call Server 1 instructs the media gateways under its control to route the call content through a special purpose media gateway termed a Lawful Intercept Node (LIN) 2. The LIN 2 is capable of intercepting the content of the communication, duplicating the content, and sending the duplicate copy to a mediation device 3 that interfaces with the LEA network.

The most common way of instructing the media gateway nodes and the LIN 2 is to use the H.248 protocol, described in H.248.1, ITU-T Recommendation, Gateway Control protocol version 3 (09/2005). When the monitored communication is set up, the Call Server 1 instructs the LIN 2 to build up an H.248 context model illustrated in Figure 3. The Call Server 1 also instructs the LIN 2 to maintain this model during the entire duration of the call regardless of any changes in call state due, for example, to invocation of supplementary services. Because of this requirement, the context model illustrated in Figure 3 requires a large amount of signalling to build up. For each termination, the Call Server 1 must send a signal to find the entity that the terminal coinnects to, and build up the context termination by termination. The usual order for determining the terminations is to determine the termination for the monitored user, followed by the termination to the mediation device for communications from the monitored user, followed by the termination for the non-monitored user, and finally the termination for communications from the non-monitored user to the mediation device. For each of these termination, signalling is sent between the Call Server 1 and the monitored user, mediation device, and non-monitored user.

The context model shown in Figure 3 is an H.248 context (Ctx2) having four terminations T3, T4, T5 and T6. Termination T3 is connected to termination T5 using a one-way topology, which means that any communication content from the monitored user is copied at T3 and the copy is sent to T5. Termination T5 forwards the copied communication content towards the mediation device 3. Similarly, termination T4 is connected to termination T6 using one-way topology resulting in that any communication content going towards the monitored used is copied at T4 and sent to T6, which forwards the communication content towards the mediation device 3. T3 and T4 are connected using the both-way topology, ensuring that the monitored and non-monitored users involved in the call can hear each other, and so adhering to the requirement that the lawful interception does not affect the users' service.

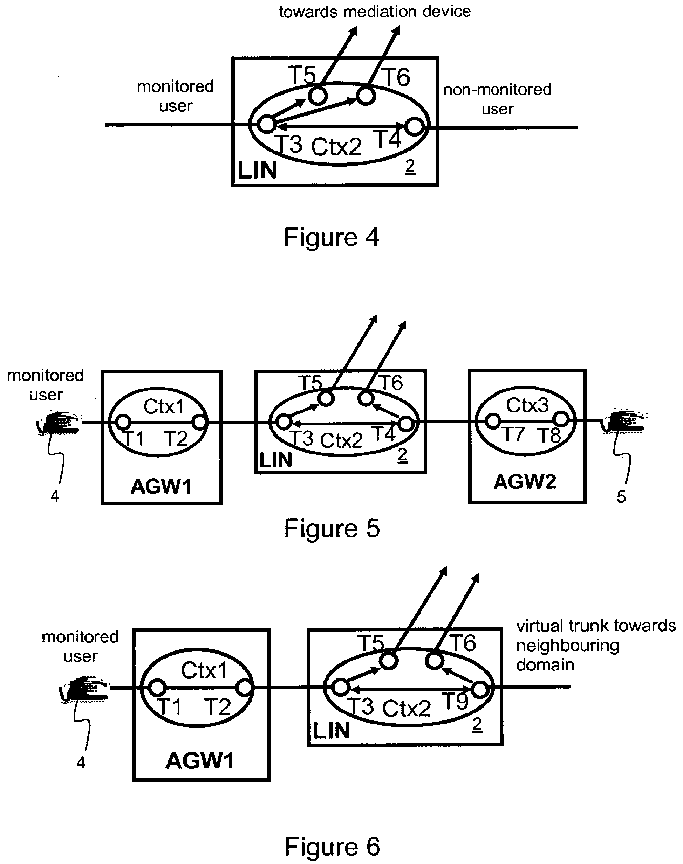

An alternative context model described in version 3 of the H.248 protocol specification is illustrated in Figure 4. In this context model, there is no connection between T4 and T6. Instead, T3 is also connected to T6 using one-way external topology, which means that T3, before sending the communication content received from T4 towards the monitored user, creates a copy of the call content intended originally only for the monitored user and sends it to T6. T6 in turn forwards the communication content towards the mediation device 3.

A problem with the alternatives illustrated in Figures 3 and 4 occurs when the context Ctx2 that performs the lawful interception dynamically changes state during the lifetime of the monitored call. This makes the implementation of the control logic in the Call Server 1 complex and prone to timing errors.

The role and use of terminations T3 and T4 depends on the call case in which the monitored user is involved and this role can change during the monitored call if supplementary services are involved. For example, Figure 5 depicts the case when the monitored user 4 is a local user connected to an access gateway AGW1, and calls a non-monitored user 5 connected to another access gateway AGW2. In this case, termination T3 is created as a helper termination (a helper termination is a termination that does not represent a user endpoint or a virtual trunk device, but is only required to bring the LIN into connection with AGW1 hosting the monitored user) together with termination T2 at the time when the Call Server 1 realizes that the monitored user 4 is subject to monitoring, and T2 and T3 is used for connecting the LIN 2 to AGW1 that the monitored user 4 is attached to. Termination T4 is created together with termination T7 at the time of through-connection of the main communication, and the Call Server 1 behaves differently and sets the topology only between T3 and T4, or between T3 and T4 and also between T4 and T6, depending on the exact timing of the setup of the monitoring connections towards the mediation device 3.

If, for example, the non-monitored user 5 forwards the communication towards a user in another domain, the actions will result in the context Ctx2 illustrated in Figure 6. Referring to Figures 5 and 6, the context Ctx2 goes through the following transitions:
1) T4 is removed from Ctx2 and T7 is removed from Ctx3 when the connection between the monitored user 4 and the non-monitored user 5 is broken. This results in destroying all the topology settings within the monitoring context Ctx2.
2) When the LIN 2 realized that the communication has been forwarded towards another domain, a new termination T9 is created in Ctx2 which represents a virtual trunk device towards the neighbouring domain.
3) When the communication between the monitored user 4 and the new non-monitored user is through-connected, the both-way topology between T3 and T9 and the one-way topology between T6 and T9 must be re-established. Note that in this example an equivalent of T7 is no longer required as there is no other gateway node where the non-monitored user is anchored, and so a different logic is required in the Call Server for handling the through connection.

The monitored user 4 may be on the terminating side of the communication and the monitored user 4 may invoke different forwarding services towards users reachable via different types of gateways. Each of these cases results in a new sequence for building up the monitoring context Ctx2, and for ensuring the correct topology settings between the terminations during the entire communication.

A further problem with the context model illustrated in Figure 3 is that finalizing the setup of the monitoring connection (that is setting the one-way topology between T4 and T6 in Figure 5) is delayed until the through connection of the monitored communication. This creates a risk that the first few seconds of the monitored communication will not be transferred towards the mediation device 3.

The context model illustrated in Figure 4 mitigates this risk and simplifies the handling of the monitoring context, because changes during the communication owing to services affect only T4, and the topology setting for the main (monitored) communication remain static throughout the communication. However, this simplification does require that a new connection type (one-way external) must be modelled in both the LIN 2 and in the Call Server 1, and the monitoring context still changes during the call albeit to a lesser extent.

3GPP TS 33.107 V8.6.0 describes lawful interception architecture and functions, but does not address the problem caused when one of the devices involved in a call subject to lawful interception requires a new context while the call is ongoing. In practice, the old context is removed and a new context is created, leading to some of the problems described above.

### Summary

It is an object of the present invention to provide methods and apparatus for lawful interception that overcome the problems using the prior art context models.

According to a first aspect, there is provided a method of providing lawful interception for use in a communication network. A Call Server in the communication network handles a communication between an originating party and a terminating party, the communication being subject to lawful interception. The Call Server generates instructions for creating at a Lawful Intercept node (LIN) a complete intercept context required to perform interception between an originating party, a terminating party, and a mediation device. The generated instructions are sent to the LIN, and the communication is routed via a generated central static intercept context at the LIN. If required, and additional helper context is generated between the central static intercept context and a device that requires the additional helper context. In this way, a complete intercept context is provided to the LIN without the context having to be built up step by step, as is currently required in prior art methods. This greatly reduces the amount of signalling required.

As an option, the generated instructions are sent to the LIN in either a single message or a plurality of messages.

As a further option, the device that requires the additional helper context is selected from any of the originating party, terminating party and the mediation device located in an external domain via a virtual trunk.

The Call Server optionally determines that the device has moved to a home domain and is no longer located in an external domain via a virtual trunk. In this eventuality, the Call Server sends a further message to the LIN, the further message including instructions to remove the helper context.

As a further option, the Call Server may determine that a device selected from one of the originating party, the terminating party and the mediation device has moved to an external domain and is now connected via a virtual trunk. In this case, the Call Server generates instructions for creating at the LIN the additional helper context between the central static intercept context and the device, and sends a further message to the LIN that includes the generated additional helper context instructions. The use of an additional helper context allows the static intercept context to remain substantially unchanged.

According to a second embodiment, there is provided a Call Server for use in a communication network. The Call Server comprises a processor for determining that a communication handled by the Call Server is subject to lawful interception. An instructions processor is also provided for generating instructions for creating at a LIN a complete intercept context required to perform interception between an originating party, a terminating party, and a mediation device. A transmitter is provided for sending to the LIN the generated instructions, and a routing module is also provided routing the communication subject to lawful interception via a generated static intercept context at the LIN. The routing module, if required, can generate further instructions for generating an additional helper context between the central static intercept context and a device that requires the helper context, in which case the transmitter is arragned to send the further instructions to the LIN.

The transmitter is optionally arranged to send the generated instructions to the LIN in either a single message or a plurality of messages.

As an option, the device that requires the helper context is selected from one of the originating party, terminating party and the mediation device is located in an external domain via a virtual trunk.

The Call Server optionally comprises a call handling module arranged to determine that the device has moved to a home domain and is no longer located in an external domain via a virtual trunk. In this case, the transmitter is arranged to send a message to the LIN, the further message including instructions to remove the helper context.

As a further option, the Call Server is provided with a call handling module arranged to determine that a device selected from one of the originating party, the terminating party and the mediation device has moved to an external domain and is connected via a virtual trunk. In this case, the instructions processor is arranged to generate instructions for creating at the LIN an additional helper context between the static intercept context and the device, and the transmitter is further arranged to send a further message to the LIN, the further message including the generated additional helper context instructions.

According to a third embodiment, there is provided a LIN for use in a communications network. The LIN is provided with a receiver for receiving from a Call Server instructions for creating a complete intercept context required to perform interception between an originating party, a terminating party, and a mediation device. A context module is provided for providing the complete intercept context between an originating party, a terminating party and a mediation device. A second receiver is provided for receiving a communication from the originating party, and a third receiver is provided for receiving a communication from the terminating party. A transmitter is also provided for forwarding a received communication to the mediation device in accordance with the intercept context. The context module is further arragned to, if required, generate an additional helper context between the central static intercept context and a device that requires the helper context.

According to a fourth embodiment, there is provided a computer program comprising computer readable code which, when run on a Call Server, causes the Call Server to perform the method of the first embodiment.

According to a fifth embodiment, there is provided a computer program as described in the fourth or fifth embodiments, carried on a carrier medium.

### Brief Description of the Drawings

Figure 1 illustrates schematically in a block diagram a reference model for lawful interception network architecture for IP networks;
Figure 2 illustrates schematically in a block diagram a layered network architecture for lawful interception;
Figure 3 illustrates schematically in a block diagram an H.248 protocol context model at a lawful intercept node;
Figure 4 illustrates schematically in a block diagram an alternative H.248 protocol context model at a lawful intercept node;
Figure 5 illustrates schematically in a block diagram an H.248 protocol context model at a lawful intercept node where two users communicate via access gateways;
Figure 6 illustrates schematically in a block diagram an H.248 protocol context model at a lawful intercept node after a user has forwarded a communication to another domain;
Figure 7 illustrates schematically in a block diagram a lawful intercept context model according to an embodiment of the invention;
Figure 8 illustrates schematically in a block diagram a lawful intercept context model after a user has forwarded a communication to another domain according to an embodiment of the invention;
Figure 9 illustrates schematically in a block diagram a lawful intercept context model where two users communicate via access gateways according to an embodiment of the invention;
Figure 10 illustrates schematically in a block diagram a lawful intercept context model where two users communicate via access gateways according to a further embodiment of the invention;
Figure 11 illustrates schematically in a block diagram a lawful intercept node according to an embodiment of the invention;
Figure 12 illustrates schematically in a block diagram a Call Server according to an embodiment of the invention;
Figure 13 is a flow diagram showing embodiments of the invention as it is implemented at the Lawful Intercept node; and
Figure 14 is a flow diagram showing embodiments of the invention as it is implemented at the Call Server.

### Detailed Description

A novel context model is created in the Lawful Intercept (LIN) node for supporting lawful interception. A central static intercept context performs the interception, and remains in place for the duration of the communication. The central intercept static context is extended with additional helper contexts tailored to the needs of different call cases and service invocations without disturbing or changing the monitoring context.

Whenever monitoring of a user is required, and the LIN 2 is selected, the Call Server 1 instructs the LIN 2 to create the intercept context model Ctx2 depicted in Figure 3 with all 4 terminations T3, T4, T5 and T6, and the required one-way and both-ways topology settings between the terminations.

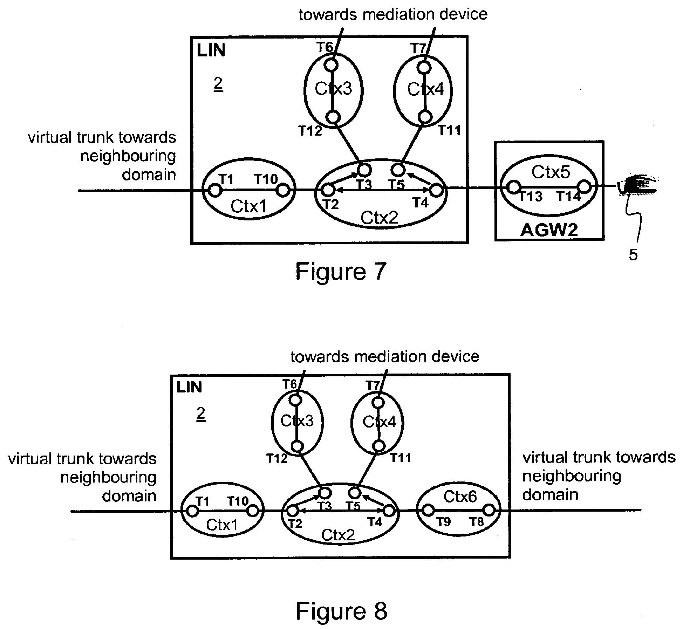

During the commincation setup, it may transpire that either the monitored 4 or the non-monitored 5 user, or the mediation device 3, is not connected through a gateway node but instead through a virtual trunk device which must be represented in the LIN 2. Instead of destroying the central intercept context Ctx2 and replacing one of the terminations in the intercept context with a new one representing the virtual trunk device, as illustrated in Figures 5 and 6, the Call Server 1 instructs the LIN 2 to create a separate helper context with a single termination representing the virtual trunk device. At the time of through connection of either the main communication or any of the monitoring communications, the same logic is used for creating connections which are used when the user is reachable via a separate gateway node. As illustrated in Figure 7, a helper termination (T10) is created in the context Ctx1 representing the virtual trunk device and then connected to the appropriate static termination (T2) in the central intercept context Ctx2. Note also that separate helper contexts Ctx3, Ctx4 are also provided from Ctx2 in order to represent the virtual trunk device needed to carry the content of communication towards the mediation device.

Referring to Figure 8, and considering the case shown in Figure 7 in which the monitored user 4 forwards the call towards another user located in a domain reachable without a dedicated gateway node. The connection between T13 and T4 shown in Figure 7 is released, T13 is deleted and a new context Ctx6 with a single termination T8 is created in the LIN 2. When the main call path is through-connected, a helper termination (T9) is created in Ctx6 and connected to T4. Note that the intercept context Ctx2 performing the actual lawful interception stays intact regardless of any changes to the monitored communication.

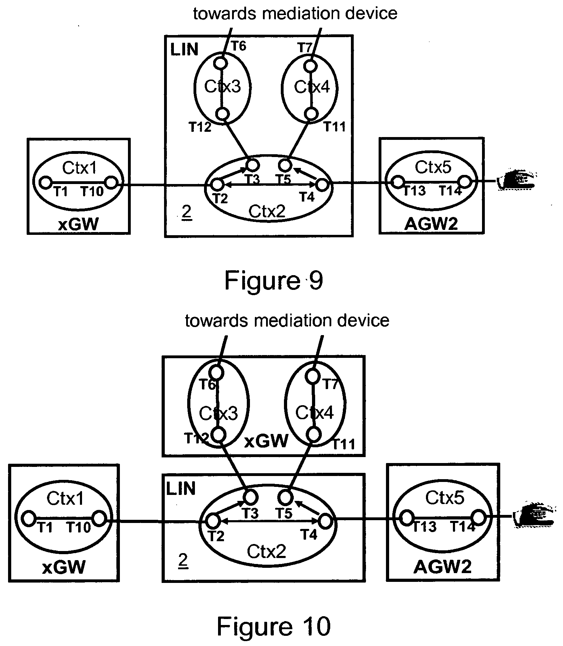

A novel context model in the LIN 2 for the case when both the monitored and the non monitored user is reachable via a dedicated gateway node, but the mediation device is reachable directly, is illustrated in Figure 9. If the mediation device is also reachable via a dedicated gateway node, the context model in the LIN falls back to the one depicted in Figure 3.

In some cases, four helper contexts may be required where there are four endpoints for the intercept context to connect to the monitored user, the non-monitored user, and the two monitoring connections towards the mediation device each one carrying only one direction of the content of communication. Figure 10 illustrates such a case, in which the mediation device is reachable via a gateway node xGW. In this example, no helper contexts are required at the LIN 2 as all of the endpoints connect via gateways.

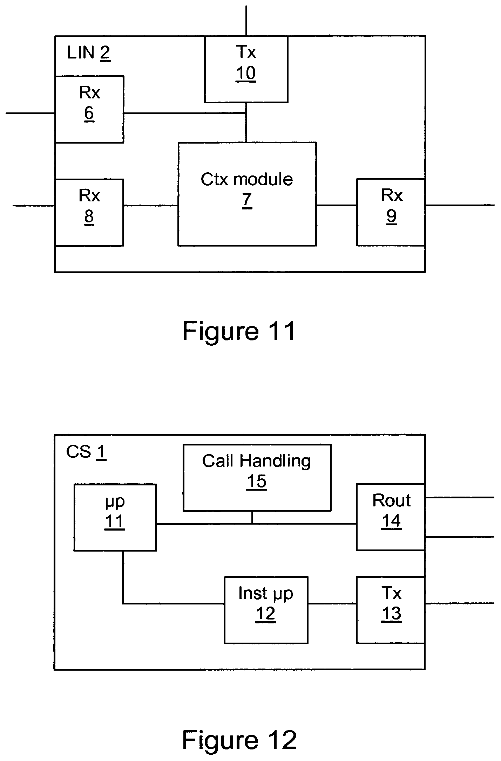

Turning now to Figure 11, a LIN 2 is illustrated. The LIN 2 is provided with a first receiver 6 for receiving instructions for creating an intercept context. A context module 7 is provided for generating the static context and any required helper contexts during the communication. Second and third receivers 8, 9 are provided from receicing communications from the monitored user 4 and the non-monitored user 5, and a tranmistter 10 is provided for forwarding any received communications to a mediation node 3.

Turning now to Figure 12, a Call Server 1 is illustrated. The Call Server 1 is provided with a processor 11 for determining that a communication handled by the Call Server 1 is subject to lawful interception. If such a determination is made, an instructions processor 12 (which may or may not be embodied in the same physical embodiment as the processor) generates instructions for creating a static context. A transmitter 13 sends the instructions to the LIN 2, and a routing module 14 routes the communcation via the LIN 2. A call handling module 15 may also be provided for determining when helper contexts should be added or removed.

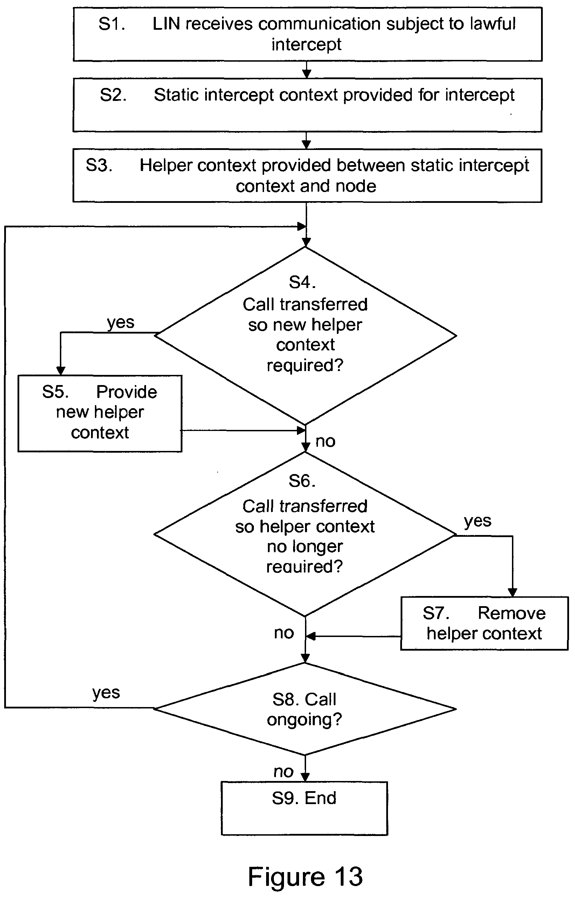

Figure 13 summarizes embodiments of the invention as it is implemented at the LIN 2, with the following numbering corresponding to the numbering of Figure 13:
S1. The LIN 2 receives a communication from the monitored user 4.
S2. The LIN 2 provides a static intercept context for lawful intercept of the communication between the monitored user 4 and the non-monitored user 5.
S3. If required, the LIN 2 provides a helper context between the static intercept context and whichever node requires the helper context.
S4. Is the communication to either party transferred such that a new helper context is required? If so, go to step S5, if not go to step S6.
S5. A new helper context is set up between the static context and the new device that requires a helper context.
S6. Is the communication to either party transferred such that helper context is no longer required? If so, go to step S7, if not go to step S8.
S7. Helper context removed.
S8. Is the communication ongoing? If so, return to step S4. If not, go to step S9.
S9. The communication is ended, and the helper and static contexts can be removed.

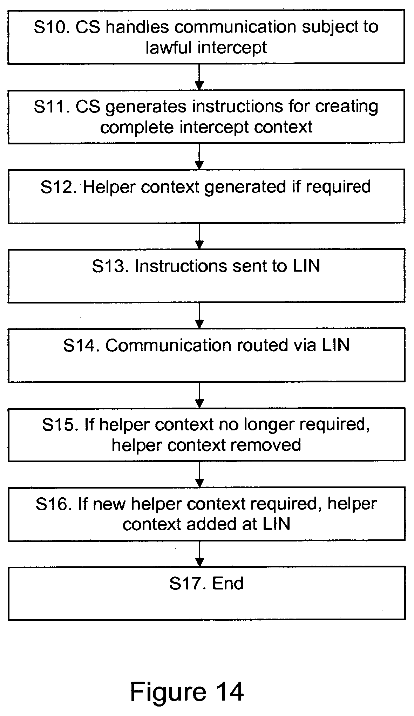

Figure 14 summarizes embodiments of the invention as it is implemented at the Call Server 1, with the following numbering corresponding to the numbering of Figure 14:
S10. The Call Server 1 handles a communication subject to lawful interception;
S11. The Call Server 1 generates instructions for creating a complete intercept context at the LIN 2;
S12. If one of the originating party, terminating party or the mediation device is located in an external domain via a virtual trunk, the instructions may include instructions for generating a helper context disposed between the static intercept context and the device.
S13. The complete intercept context is sent either in a single message or a plurality of messages to the LIN 2.
S14. The communication is routed via the Lawful Intercept node.
S15. If the device connected via a virtual trunk moves to a home domain, the helper context is removed.
S16. If a device in the home domain moves to an external domain and connects via a virtual trunk, the Call Server 1 detects this and instructs the LIN 2 to add a helper context between the device and the static intercept context.
S17. When the communciation ends, the static context and any helper contexts can be removed.

The intercept context Ctx2 used for performing lawful interception remains static throughout the lifetime of a communication and so there is no need to build it up step-by-step depending on the call case. This greatly simplifies the logic required in the Call Server for controlling the LIN 2. An additional advantage in futher simplifying the control logic in the Call Server 1 is uniform handling of all the connections towards the LIN 2 context regardless of whether the monitored 4, non-monitored user 5 or the mediation device 3 is connected via a dedicated gateway node or it is connected directly to the LIN 2.

The following abbreviations have been used in this specification:
AGW: Access Gateway
LIN: Lawful Intercept Node
xGW: any sort of gateway node

The above description discusses an embodiment of the invention in which the originator of the communication is the monitored user. However, it will be apparent that the invention can also apply to a case in which the terminating party is the monitored user subject to lawful interception. It will also be apparent that the invention can be applied to situations in which both parties are subject to lawful intercept monitoring, and also to multiparty communications such as conference calls and the like.

Although various embodiments have been shown and described in detail, the claims are not limited to any particular embodiment or example. None of the above description should be read as implying that any particular element, step, or function is essential such that it must be included in the claims' scope. The scope of protection is defined by the claims.

## Claims

1. A method of providing lawful interception for use in a communication network, the method comprising:
at a Call Server in the communication network, handling (S10) a communication subject to lawful interception;
generating instructions (S11) for creating at a Lawful Intercept node a complete intercept context required to perform interception between an originating party, a terminating party, and a mediation device;
sending (S13) to the Lawful Intercept node the generated instructions;
routing (S14) the communication subject to lawful interception via a generated central static intercept context at the Lawful Intercept node; the method **characterized by**
if required, generating (S16) an additional helper context between the central static intercept context and a device that requires the additional helper context.

2. The method according to claim 1, wherein the step of sending to the Lawful Intercept node the generated instructions comprises sending the generated instructions in one of a single message and a plurality of messages.

3. The method according to claim 1 or 2, wherein in the event that the device that requires the helper context is selected from one of the originating party, terminating party and the mediation device located in an external domain via a virtual trunk.

4. The method according to claim 3, further comprising at the Call Server, determining that the device has moved to a home domain and is no longer located in an external domain via a virtual trunk; and
sending a message to the Lawful Intercept node, the further message including instructions to remove the helper context.

5. The method according to any one of claims 1 to 4, further comprising:
at the Call Server, determining that a device selected from one of the originating party, the terminating party and the mediation device has moved to an external domain and is connected via a virtual trunk;
generating instructions for creating at the Lawful Intercept node the additional helper context between the central static intercept context and the device; and
sending a further message to the Lawful Intercept node, the further message including the generated additional helper context instructions.

6. A Call Server (1) for use in a communication network, the Call Server comprising:
a processor (11) for determining that a communication handled by the Call Server (1) is subject to lawful interception;
an instructions processor (12) for generating instructions for creating at a Lawful Intercept node (2) a complete intercept context required to perform interception between an originating party, a terminating party, and a mediation device;
a transmitter (13) for sending to the Lawful Intercept node (2) the generated instructions; and **characterized by**
a routing module (14) for routing the communication subject to lawful interception via a generated central static intercept context at the Lawful Intercept node; and
if required, generating further instructions for generating an additional helper context between the central static intercept context and a device that requires the helper context, the transmitter being arranged to send the further instructions to the Lawful Intercept node.

7. The Call Server (1) according to claim 6, wherein the transmitter (13) is arranged to send to the Lawful Intercept node the generated instructions in one of a single message and a plurality of messages.

8. The Call Server (1) according to claim 6 or 7, wherein the device that requires the helper context is a device selected from one of the originating party, terminating party and the mediation device located in an external domain via a virtual trunk.

9. The Call Server (1) according to claim 8, further comprising a call handling module arranged to determine that the device has moved to a home domain and is no longer located in an external domain via a virtual trunk, and wherein the transmitter is arranged to send a message to the Lawful Intercept node, the further message including instructions to remove the helper context.

10. The Call Server (1)according to any one of claims 6 to 9, further comprising a call handling module (15) arranged to determine that the device that requires the helper context is a device selected from one of the originating party, the terminating party and the mediation device, the device having moved to an external domain and connected via a virtual trunk, wherein the instructions processor is arranged to generate instructions for creating at the Lawful Intercept node an additional helper context between the central static intercept context and the device, and the transmitter is further arranged to send a further message to the Lawful Intercept node, the further message including the generated additional helper context instructions.

11. A Lawful Intercept node (2) for use in a communications network, the Lawful Intercept node comprising:
a receiver (6) for receiving from a Call Server (1) instructions for creating a complete intercept context required to perform interception between an originating party, a terminating party, and a mediation device;
a context module (7) for providing the complete intercept context between an originating party, a terminating party and a mediation device;
a second receiver (8) for receiving a communication from the originating party;
a third receiver (9) for receiving a communication from the terminating party;
a transmitter (10) for forwarding a received communication to the mediation device in accordance with the intercept context; and
**characterized in that** the context module (7) is further arranged to, if required, generate an additional helper context between the central static intercept context and a device that requires the helper context.

12. A computer program comprising computer readable code which, when run on a Call Server, causes the Call Server to perform a method as claimed in any one of claims 1 to 5.

13. A carrier medium carrying the computer program as claimed in claim 12.

## Patentansprüche

1. Verfahren zum Bereitstellen von legalem Abhören zur Verwendung in einem Kommunikationsnetzwerk, wobei das Verfahren umfasst:
in einem Gesprächsserver in dem Kommunikationsnetzwerk erfolgendes Abwickeln (S10) einer Kommunikation, die legalem Abhören unterliegt;
Erzeugen von Anweisungen (S 11), um in einem Knoten für legales Abhören einen vollständigen Abhörkontext einzurichten, der erforderlich ist, um das Abhören zwischen einem rufenden Teilnehmer, einem gerufenen Teilnehmer und einer Vermittlungsvornchtung durchzuführen;
Senden (S 13) der erzeugten Anweisungen an den Knoten für legales Abhören;
Leiten (S 14) der Kommunikation, die legalem Abhören unterliegt, über einen erzeugten zentralen statischen Abhörkontext im Knoten für legales Abhören; wobei das Verfahren **gekennzeichnet ist durch**:
wenn erforderlich, Erzeugen (S16) eines zusätzlichen Helferkontextes zwischen dem zentralen statischen Abhörkontext und einer Vorrichtung, die den zusätzlichen Helferkontext erfordert.

2. Verfahren nach Anspruch 1, worin der Schritt des Sendens der erzeugten Anweisungen an den Knoten für legales Abhören umfasst: Senden der erzeugten Anweisungen entweder in einer einzelnen Nachricht oder in einer Vielzahl von Nachrichten.

3. Verfahren nach Anspruch 1 oder 2, worin die den zusätzlichen Helferkontext erfordernde Vorrichtung aus dem rufenden Teilnehmer, dem gerufenen Teilnehmer und der Vermittlungsvorrichtung ausgewählt wird und sich über eine virtuelle Leitung in einer externen Domäne befindet.

4. Verfahren nach Anspruch 3, ferner umfassend:
im Gesprächsserver erfolgendes Bestimmen, dass sich die Vorrichtung in eine Heimatdomäne bewegt hat und sich nicht mehr über eine virtuelle Leitung in einer externen Domäne befindet; und
Senden einer Nachricht an den Knoten für legales Abhören, wobei die weitere Nachricht Anweisungen einschließt, den Helferkontext aufzuheben.

5. Verfahren nach einem der Ansprüche 1 bis 4, ferner umfassend:
im Gesprächsserver erfolgendes Bestimmen, dass eine aus dem rufenden Teilnehmer, dem gerufenen Teilnehmer und der Vermittlungsvorrichtung ausgewählte Vorrichtung sich in eine externe Domäne bewegt hat und über eine virtuelle Leitung verbunden ist;
Erzeugen von Anweisungen, um im Knoten für legales Abhören den zusätzlichen Helferkontext zwischen dem zentralen statischen Abhörkontext und der Vorrichtung einzurichten; und
Senden einer weiteren Nachricht an den Knoten für legales Abhören, wobei die weitere Nachricht die erzeugten Anweisungen des zusätzlichen Helferkontextes einschließt.

6. Gesprächsserver (1) zur Verwendung in einem Kommunikationsnetzwerk, wobei der Gesprächsserver umfasst:
einen Prozessor (11) zum Bestimmen, dass eine durch den Gesprächsserver (1) abgewickelte Kommunikation legalem Abhören unterliegt;
einen Anweisungsprozessor (12) zum Erzeugen von Anweisungen, um in einem Knoten für legales Abhören (2) einen vollständigen Abhörkontext einzurichten, der erforderlich ist, um das Abhören zwischen einem rufenden Teilnehmer, einem gerufenen Teilnehmer und einer Vermittlungsvorrichtung durchzuführen;
einen Sender (13) zum Senden der erzeugten Anweisungen an den Knoten für legales Abhören (2); und **gekennzeichnet durch**:
ein Leitweglenkungsmodul (14) zum Leiten der Kommunikation, die legalem Abhören unterliegt, über einen erzeugten zentralen statischen Abhörkontext im Knoten für legales Abhören; und
wenn erforderlich, Erzeugen weiterer Anweisungen zum Erzeugen eines zusätzlichen Helferkontextes zwischen dem zentralen statischen Abhörkontext und einer Vorrichtung, die den Helferkontext erfordert, wobei der Sender dafür eingerichtet ist, die weiteren Anweisungen an den Knoten für legales Abhören zu senden.

7. Gesprächsserver (1) nach Anspruch 6, worin der Sender (13) dafür eingerichtet ist, die erzeugten Anweisungen entweder in einer einzelnen Nachricht oder in einer Vielzahl von Nachrichten an den Knoten für legales Abhören zu senden.

8. Gesprächsserver (1) nach Anspruch 6 oder 7, worin die Vorrichtung, die den Helferkontext erfordert, eine aus dem rufenden Teilnehmer, dem gerufenen Teilnehmer und der Vermittlungsvorrichtung ausgewählte Vorrichtung ist, die sich über eine virtuelle Leitung in einer externen Domäne befindet.

9. Gesprächsserver (1) nach Anspruch 8, ferner ein Gesprächsabwicklungsmodul umfassend, das dafür eingerichtet ist, zu bestimmen, dass sich die Vorrichtung in eine Heimatdomäne bewegt hat und sich nicht mehr über eine virtuelle Leitung in einer externen Domäne befindet, und worin der Sender dafür eingerichtet ist, eine Nachricht an den Knoten für legales Abhören zu senden, wobei die weitere Nachricht Anweisungen einschließt, den Helferkontext aufzuheben.

10. Gesprächsserver (1) nach einem der Ansprüche 6 bis 9, ferner ein Gesprächsabwicklungsmodul (15) umfassend, das dafür eingerichtet ist, zu bestimmen, dass die Vorrichtung, die den Helferkontext erfordert, eine aus dem rufenden Teilnehmer, dem gerufenen Teilnehmer und der Vermittlungsvorrichtung ausgewählte Vorrichtung ist, wobei sich die Vorrichtung in eine externe Domäne bewegt hat und über eine virtuelle Leitung verbunden ist, worin der Anweisungsprozessor dafür eingerichtet ist, Anweisungen zu erzeugen, um im Knoten für legales Abhören einen zusätzlichen Helferkontext zwischen dem zentralen statischen Abhörkontext und der Vorrichtung einzurichten, und der Sender ferner dafür eingerichtet ist, eine weitere Nachricht an den Knoten für legales Abhören zu senden, wobei die weitere Nachricht die erzeugten Anweisungen für den zusätzlichen Helferkontext einschließt.

11. Knoten für legales Abhören (2) zur Verwendung in einem Kommunikationsnetzwerk, wobei der Knoten für legales Abhören umfasst:
einen Empfänger (6) zum Empfangen von Anweisungen zum Einrichten eines vollständigen Abhörkontextes, der erforderlich ist, um das Abhören zwischen einem rufenden Teilnehmer, einem gerufenen Teilnehmer und einer Vermittlungsvorrichtung durchzuführen, von einem Gesprächsserver (1);
ein Kontextmodul (7) zum Bereitstellen des vollständigen Abhörkontextes zwischen einem rufenden Teilnehmer, einem gerufenen Teilnehmer und einer Vermittlungsvorrichtung;
einen zweiten Empfänger (8) zum Empfangen einer Kommunikation vom rufenden Teilnehmer;
einen dritten Empfänger (9) zum Empfangen einer Kommunikation vom gerufenen Teilnehmer;
einen Sender (10) zum Weiterleiten einer empfangenen Kommunikation zur Vermittlungsvorrichtung gemäß dem Abhörkontext; und
**dadurch gekennzeichnet, dass** das Kontextmodul (7) ferner dafür eingerichtet ist, wenn erforderlich einen zusätzlichen Helferkontext zwischen dem zentralen statischen Abhörkontext und einer Vorrichtung, die den zusätzlichen Helferkontext erfordert, zu erzeugen.

12. Computerprogramm, das computerlesbaren Code umfasst, der, wenn er auf einem Gesprächsserver läuft, den Gesprächsserver veranlasst, ein Verfahren nach einem der Ansprüche 1 bis 5 durchzuführen.

13. Trägermedium, welches das Computerprogramm nach Anspruch 12 trägt.

## Revendications

1. Procédé de fourniture d'interception légale à utiliser dans un réseau de communication, le procédé comprenant les étapes ci-dessous consistant à :
au niveau d'un serveur d'appels dans le réseau de communication, traiter (S10) une communication sujette à une interception légale ;
générer des instructions (S11) en vue de créer, au niveau d'un noeud d'interception légale, un contexte d'interception complet requis afin de mettre en oeuvre une interception entre une partie d'origine, une partie d'arrivée, et un dispositif de médiation ;
envoyer (S 13), au noeud d'interception légale, les instructions générées ;
acheminer (S14) la communication sujette à une interception légale par l'intermédiaire d'un contexte d'interception statique central généré, au niveau du noeud d'interception légale ; le procédé étant **caractérisé par** l'étape ci-dessous consistant à :
si nécessaire, générer (S16) un contexte d'assistance supplémentaire entre le contexte d'interception statique central et un dispositif qui nécessite le contexte d'assistance supplémentaire.

2. Procédé selon la revendication 1, dans lequel l'étape d'envoi, au noeud d'interception légale, des instructions générées, consiste à envoyer les instructions générées dans l'un parmi un message unique et une pluralité de messages.

3. Procédé selon la revendication 1 ou 2, dans lequel, le dispositif qui nécessite le contexte d'assistance est sélectionné à partir de l'un des éléments parmi la partie d'origine, la partie d'arrivée et le dispositif de médiation, situé dans un domaine externe par l'intermédiaire d'une jonction virtuelle.

4. Procédé selon la revendication 3, comprenant en outre les étapes ci-après consistant à, au niveau du serveur d'appels, déterminer que le dispositif s'est déplacé vers un domaine de rattachement et qu'il n'est plus situé dans un domaine externe par l'intermédiaire d'une jonction virtuelle ; et
envoyer un message au noeud d'interception légale, le message supplémentaire incluant des instructions visant à supprimer le contexte d'assistance.

5. Procédé selon l'une quelconque des revendications 1 à 4, comprenant en outre les étapes ci-dessous consistant à :
au niveau du serveur d'appels, déterminer qu'un dispositif, sélectionné à partir de l'un des éléments parmi la partie d'origine, la partie d'arrivée et le dispositif de médiation, s'est déplacé vers un domaine externe et est connecté par l'intermédiaire d'une jonction virtuelle ;
générer des instructions visant à créer, au niveau du noeud d'interception légale, le contexte d'assistance supplémentaire entre le contexte d'interception statique central et le dispositif ; et
envoyer un message supplémentaire au noeud d'interception légale, le message supplémentaire incluant les instructions de contexte d'assistance supplémentaire générées.

6. Serveur d'appels (1) destiné à être utilisé dans un réseau de communication, le serveur d'appels comprenant :
un processeur (11) destiné à déterminer qu'une communication traitée par le serveur d'appels (1) est sujette à une interception légale ;
un processeur d'instructions (12) destiné à générer des instructions visant à créer, au niveau d'un noeud d'interception légale (2), un contexte d'interception complet requis en vue de mettre en oeuvre une interception entre une partie d'origine, une partie d'arrivée, et un dispositif de médiation ;
un émetteur (13) destiné à envoyer, au noeud d'interception légale (2), les instructions générées ; et **caractérisé par**
un module de routage (14) destiné à acheminer la communication sujette à une interception légale par l'intermédiaire d'un contexte d'interception statique central généré, au niveau du noeud d'interception légale ; et
si nécessaire, à générer des instructions supplémentaires visant à générer un contexte d'assistance supplémentaire entre le contexte d'interception statique central et un dispositif qui nécessite le contexte d'assistance, l'émetteur étant agencé de manière à envoyer les instructions supplémentaires au noeud d'interception légale.

7. Serveur d'appels (1) selon la revendication 6, dans lequel l'émetteur (13) est agencé de manière à envoyer, au noeud d'interception légale, les instructions générées, dans l'un parmi un message unique et une pluralité de messages.

8. Serveur d'appels (1) selon la revendication 6 ou 7, dans lequel le dispositif qui nécessite le contexte d'assistance est un dispositif sélectionné à partir de l'un des éléments parmi la partie d'origine, la partie d'arrivée et le dispositif de médiation, situé dans un domaine externe par l'intermédiaire d'une jonction virtuelle.

9. Serveur d'appels (1) selon la revendication 8, comprenant en outre un module de traitement d'appels agencé de manière à déterminer que le dispositif s'est déplacé vers un domaine de rattachement et qu'il n'est plus situé dans un domaine externe par l'intermédiaire d'une jonction virtuelle, et dans lequel l'émetteur est agencé de manière à envoyer un message au noeud d'interception légale, le message supplémentaire incluant des instructions visant à supprimer le contexte d'assistance.

10. Serveur d'appels (1) selon l'une quelconque des revendications 6 à 9, comprenant en outre un module de traitement d'appels (15) agencé de manière à déterminer que le dispositif qui nécessite le contexte d'assistance est un dispositif sélectionné à partir de l'un des éléments parmi la partie d'origine, la partie d'arrivée et le dispositif de médiation, le dispositif s'étant déplacé vers un domaine externe et étant connecté par l'intermédiaire d'une jonction virtuelle, dans lequel le processeur d'instructions est agencé de manière à générer des instructions visant à créer, au niveau du noeud d'interception légale, un contexte d'assistance supplémentaire entre le contexte d'interception statique central et le dispositif, et dans lequel l'émetteur est en outre agencé de manière à envoyer un message supplémentaire au noeud d'interception légale, le message supplémentaire incluant les instructions de contexte d'assistance supplémentaire générées.

11. Noeud d'interception légale (2) destiné à être utilisé dans un réseau de communication, le noeud d'interception légale comprenant :
un récepteur (6) destiné à recevoir, en provenance d'un serveur d'appels (1), des instructions visant à créer un contexte d'interception complet requis en vue de mettre en oeuvre une interception entre une partie d'origine, une partie d'arrivée, et un dispositif de médiation ;
un module de contexte (7) destiné à fournir le contexte d'interception complet entre une partie d'origine, une partie d'arrivée et un dispositif de médiation ;
un deuxième récepteur (8) destiné à recevoir une communication en provenance de la partie d'origine ;
un troisième récepteur (9) destiné à recevoir une communication en provenance de la partie d'arrivée ;
un émetteur (10) destiné à acheminer une communication reçue, vers le dispositif de médiation, selon le contexte d'interception ; et
**caractérisé en ce que** le module de contexte (7) est en outre agencé de manière à, si nécessaire, générer un contexte d'assistance supplémentaire entre le contexte d'interception statique central et un dispositif qui nécessite le contexte d'assistance.

12. Programme informatique comprenant un code lisible par ordinateur qui, lorsqu'il est exécuté sur un serveur d'appels, amène le serveur d'appels à mettre en oeuvre un procédé selon l'une quelconque des revendications 1 à 5.

13. Support porteur portant le programme informatique selon la revendication 12.
